Europäisches Patentamt

European Patent Office

Office européen des brevets

(11) Numéro de publication: **0 456 324 A1**

# (12) DEMANDE DE BREVET EUROPEEN

(21) Numéro de dépôt: **91201077.4**

(22) Date de dépôt: **06.05.91**

(51) Int. Cl.5: **H04N 5/46, H04N 7/167**

(30) Priorité: **11.05.90 FR 9005915**

(43) Date de publication de la demande:
**13.11.91 Bulletin 91/46**

(84) Etats contractants désignés:
**DE FR GB**

(71) Demandeur: **PHILIPS ELECTRONIQUE GRAND PUBLIC**
**51, Rue Carnot**
**F-92150 Suresnes(FR)**
(84) **FR**

Demandeur: **N.V. Philips'**
**Gloeilampenfabrieken**
**Groenewoudseweg 1**
**NL-5621 BA Eindhoven(NL)**
(84) **DE GB**

(72) Inventeur: **Ernou, Michel**
**Société Civile S.P.I.D., 156, Boulevard Haussmann**
**F-75008 Paris(FR)**
Inventeur: **Servaes, Alain**
**Société Civile S.P.I.D., 156, Boulevard Haussmann**
**F-75008 Paris(FR)**

(74) Mandataire: **Caron, Jean et al**
**Société Civile S.P.I.D. 156, Boulevard Haussmann**
**F-75008 Paris(FR)**

(54) **Dispositif pour indiquer la polarité d'un signal vidéo.**

(57) Le dispositif est muni d'un compteur (21) pour compter, pendant un signal de suppression de trame, les signaux de synchronisation de ligne appliqués à son entrée d'horloge (CP). L'entrée (CEP) d'autorisation de comptage du compteur reçoit un signal dont la durée correspond à la durée de cinq demi-lignes. Le compteur repart à zéro lorsqu'il a compté cinq signaux, en indiquant alors sur une sortie spécifique (TC) que le comptage a atteint cinq, et cette sortie (TC) est reliée à un circuit logique (14 à 18), qui fournit à chaque fin d'intervalle de suppression de trame un signal binaire (19) qui reste inchangé lorsque le chiffre de comptage du compteur a atteint cinq et qui est inversé dans le cas contraire. Ce signal binaire commande un démodulateur pour l'adapter à la polarité.

Application : Récepteurs de télévision, soit multistandards, soit dans lesquels il est nécessaire de reconnaître la polarité d'un signal video qui est inversé par rapport au signal normal d'une norme d'émission donnée, par exemple dans le but de renforcer un brouillage.

FIG.3

La présente invention concerne un dispositif pour indiquer la polarité d'un signal video, signal video qui comporte des intervalles de suppression de trame pendant lesquels est présente une pluralité de signaux particuliers.

Un tel dispositif peut être utilisé entre autres dans des récepteurs de télévision dits multistandards. Dans les récepteurs modernes, il est souvent prévu que le récepteur détermine lui même la norme de l'émission reçue, sans intervention de l'usager. Ceci peut être fait par exemple de façon connue en se basant sur l'intervalle entre la porteuse son et la porteuse image, comme cela est décrit dans le document FR-A-2 592 543.

Le procédé décrit dans ce document est toutefois inapplicable lorsqu'il s'agit de reconnaître la polarité d'un signal video qui est inversé par rapport au signal normal d'une norme d'émission donnée, par exemple dans le but de renforcer le brouillage d'une émission embrouillée réservée à certains spectateurs. On peut se proposer par exemple d'utiliser la norme dite "I" qui prévoit un son à 6 MHz en FM et une modulation video négative, mais en inversant de temps en temps le sens de la modulation, qui peut donc devenir positive.

L'invention fournit un dispositif qui permet dans un tel cas d'indiquer la polarité du signal video, sans pour autant que le signal corresponde à une norme officielle.

A cet effet, le dispositif selon l'invention est muni d'un compteur pour compter lesdits signaux particuliers à partir du début de l'intervalle de suppression de trame et pendant une durée déterminée, et d'un circuit logique qui fournit à chaque fin d'intervalle de suppression de trame un signal binaire qui reste inchangé lorsque le chiffre de comptage du compteur est égal à un nombre prédéterminé et qui est inversé lorsque le chiffre de comptage du compteur est différent dudit nombre prédéterminé.

Avantageusement, le compteur est muni d'une entrée d'autorisation de comptage qui est reliée à un circuit de séparation de synchronisation, afin d'en recevoir un signal dont la durée correspond à la durée de cinq demi-lignes, et ledit chiffre de comptage déterminé du compteur est cinq.

Ainsi on tire parti au mieux des caractéristiques du signal de suppression de trame.

Dans une forme de réalisation particulière, le compteur repart à zéro lorsqu'il a atteint ledit chiffre de comptage égal à un nombre prédéterminé, en indiquant alors sur une sortie spécifique que le chiffre de comptage a atteint ledit nombre prédéterminé, et cette sortie spécifique est reliée à une entrée du susdit circuit logique.

Une manière intéressante de constituer le susdit circuit logique est caractérisée en ce qu'il est muni d'une première porte NON-ET, à deux entrées, à une première entrée de laquelle est reliée une sortie spécifique du compteur indiquant que le chiffre de comptage a atteint ledit nombre prédéterminé, laquelle sortie spécifique est aussi reliée via un inverseur à une première entrée d'une seconde porte NON-ET, à deux entrées, les sorties de ces deux portes sont chacune reliées à une entrée d'une troisième porte NON-ET, à deux entrées, dont la sortie est reliée à l'entrée D d'une bascule de type D, à l'entrée d'horloge de laquelle est amené un signal qui englobe l'ensemble du temps de suppression de trame, les sorties Q et Q de ladite bascule étant rebouclées sur des deuxièmes entrées respectivement des première et seconde portes.

La description qui va suivre, en regard des dessins annexés décrivant des exemples non limitatifs fera bien comprendre comment l'invention peut être réalisée.

La figure 1 représente schématiquement une partie d'un récepteur de télévision comportant un dispositif selon l'invention, pour illustrer comment ce dernier est utilisé.

La figure 2 est un diagramme de temps illustrant quelques signaux présents dans le dispositif.

La figure 3 est un schéma détaillé d'un exemple de réalisation d'un dispositif selon l'invention.

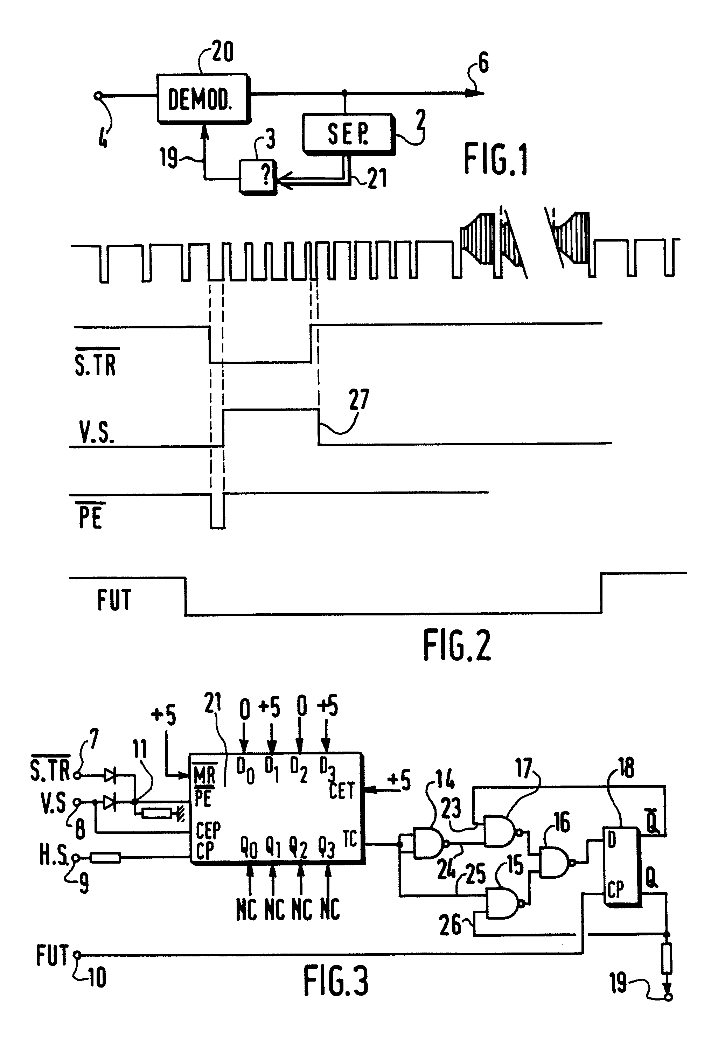

Sur la figure 1, un signal de télévision à fréquence intermédiaire est amené sur une entrée 4 pour être démodulé dans un démodulateur 20 qui est par exemple un circuit intégré du commerce de type TDA 2549. Ce circuit peut aussi bien démoduler des signaux en modulation positive que des signaux en modulation négative, à condition qu'il soit informé au sujet de cette polarité. A cet effet, il est équipé d'une entrée 19 par laquelle il est possible de commander le circuit 20 pour l'adapter à une polarité déterminée. Un signal logique zéro indique par exemple une modulation positive, et un signal logique 1 indique une modulation négative.

A la sortie 6 du démodulateur 20 est disponible un signal en bande de base comportant à la fois le signal video et celui de synchronisation ; ce signal est entre autres fourni à un séparateur de synchronisation 2 qui en extrait les signaux de synchronisation. Bien entendu, les circuits 19 et 2 sont incapables de travailler correctement si le signal est inversé par rapport au sens de modulation indiqué sur l'entrée 19. Les sorties des signaux de synchronisation produits par le séparateur 2 sont reliées par une connexion multiple 21 à un dispositif 3 selon l'invention, qui délivre sur sa sortie le signal 19 de commande du circuit 20.

Les différents signaux de synchronisation en question qui sont utilisés par le dispositif 3 sont illustrés sur la figure 2. En haut est représenté un exemple de signal video issu du démodulateur 20 dans un cas où ce dernier fonctionne normalement, et ceci au moment de l'apparition d'un intervalle de suppression de trame. Un tel signal video est bien connu.

Sur la ligne en dessous est représenté le signal $\overline{S.TR}$ de synchronisation de trame, qui commence avec le premier front négatif à 2 $f_L$ ($f_L$ est la fréquence lignes). Le signal de synchronisation verticale V.S ("vertical synchro") est à peu près le même sauf qu'il commmence environ une demi ligne après et qu'il est de polarité opposée. Enfin le signal FUT ("fenêtre utile") englobe l'ensemble du temps de suppression de trame ; le début d'un tel signal est obtenu par exemple de façon connue par comptage d'un nombre adéquat de lignes à partir de la synchronisation de trame précédente. Tous ces signaux sont produits de façon connue par le circuit de séparation 2 de la figure 1. Le signal $\overline{PE}$, quant à lui, est le résultat d'une opération "OU" sur les signaux $\overline{S.TR}$ et V.S.

Le dispositif de la figure 3 comprend un compteur 21 suivi de circuits logiques 14 à 18. Le compteur 21 est par exemple un compteur du commerce, de type HC 161, et les sigles utilisés ci-après pour désigner ses connexions d'entrée-sortie sont ceux de sa notice descriptive. Ce compteur compte des fronts montants de zéro à quinze puis repart à zéro en plaçant alors une sortie TC ("terminal count"), qui est destinée à indiquer que le comptage a atteint quinze, à l'état 1 jusqu'au comptage du front montant suivant. Il est muni d'une entrée $\overline{MR}$ de remise à zéro générale ("main reset") et d'une entrée CET d'entrée de retenue ("count enable carry"), qui sont ici inutilisées et reliées au +5 volts. Des entrées $D_0$ à $D_3$ servent à prépositionner le compteur : ici les entrées $D_0$ et $D_2$ sont reliées en permanence à zéro et les entrées $D_1$ et $D_3$ sont reliées en permanence à +5 volts, c'est-à-dire au niveau logique 1. Ainsi le chiffre de prépositionnement pst toujours dix. Comme le compteur compte jusqu'à quinze en partant de dix, il compte donc cinq fronts montants appliquées à son entrée d'horloge CP ("clock input") avant d'être repositionné et de fournir un état haut sur sa sortie TC ; on dira alors que le "chiffre de comptage" atteint est de cinq. Les sorties de comptage $Q_0$ à $Q_3$ ne sont pas utilisées, car on est intéressé seulement par le chiffre de comptage cinq pour lequel la sortie TC fournit un signal.

Les signaux $\overline{S.TR}$ et V.S sont amenés sur deux entrées 7 et 8. Ces entrées 7 et 8 sont reliées chacune par une diode à un point 11 relié à la masse par une résistance. Avec les diodes dans le sens représenté sur la figure, la fonction logique OU est réalisée sur les signaux appliqués aux bornes 7 et 8. Une porte logique OU de tout autre type pourrait aussi bien être utilisée à la place de ce montage. Le signal $\overline{PE}$ est donc présent au point 11. Le sigle $\overline{PE}$ a été choisi pour ce signal parce que c'est celui d'une entrée d'autorisation $\overline{PE}$ ("parallel enable") du compteur 21 à laquelle il est appliqué. Le signal V.S est en outre appliqué à une entrée d'autorisation de comptage CEP ("count enable input") du compteur. Enfin un signal H.S ("horizontal sync") est appliqué à l'entrée CP. Ce signal présente une impulsion pour chaque front descendant du signal video de la figure 2, c'est-à-dire à fréquence $F_L$ ou à fréquence 2 $f_L$. Ainsi connecté, le compteur est prépositionné par le signal $\overline{PE}$ appliqué à son entrée $\overline{PE}$ puis compte les impulsions du signal H.S tant que le signal V.S est "haut". Les signaux $\overline{S.TR}$ et V.S reviennent à leur état initial après cinq fronts du signal video et, comme V.S revient en 27 après $\overline{S.TR}$, le signal $\overline{PE}$ reste au repos (état 1).

Lorsque le démodulateur 20 et le séparateur 2 fonctionnent correctement , le circuit 21 compte donc cinq fronts et délivre alors un signal sur la sortie TC. Comme le comptage est arrêté par la redescente du signal V.S d'autorisation de comptage au temps 27 de la figure 2, l'impulsion H.S suivante qui ferait retomber le signal TC n'est pas comptée et le signal TC est maintenu jusqu'à la suppression de trame suivante.

Les différentes résistances représentées sur la figure 3 ont pour but, soit de limiter les courants, soit de créer un chemin de courant vers la masse ; une valeur de dix mille ohms peut être choisie pour chacune d'elles.

Ce montage est donné à titre d'exemple et il est évident qu'un spécialiste des circuits logiques peut facilement en imaginer d'autres qui rempliraient la même fonction, par exemple à partir d'autres compteurs que le HC 161 ou bien aussi par logiciel.

Le signal maintenu sur la sortie TC du compteur est amené à une première entrée 25 d'une porte NON-ET 15, et ce même signal, inversé par une porte 14, est amené à une première entrée 24 d'une autre porte NON-ET 17. Les sorties des portes 15 et 17 sont chacune reliées à une entrée d'une porte NON-ET 16 à deux entrées dont la sortie est reliée à l'entrée D d'une bascule 18 de type D ; le signal FUT est amené à l'entrée d'horloge CP ("clock input") de cette bascule 18. Enfin les sorties $\overline{O}$ et Q de la bascule 18 sont rebouclées sur les deuxièmes entrées respectivement 23 et 26 des portes 17 et 15. Le signal sur la sortie Q de la bascule 18 est disponible sur une sortie 19 pour être amené à l'entrée de commande de polarité du démodulateur 20 de la figure 1.

Ce montage fonctionne de la façon suivante :

Supposons qu'un état où "tout va bien" est obtenu, et ceci depuis un temps supérieur à la durée d'une trame. Supposons encore que la modulation est positive et que donc le signal sur la connexion 19 est zéro : c'est aussi le signal Q de la bascule 18, appliqué à l'entrée 26 de la porte 15. Bien entendu un signal 1, qui est celui de $\overline{Q}$, est alors présent à l'entrée 23 de la porte 17. Après le comptage de cinq impulsions, le signal TC = 1 est présent sur l'entrée 25 de la porte 15, et un signal inversé zéro est présent à l'entrée 24 de la porte 17. Les sorties des portes 15 et 17 sont donc toutes deux à 1 et la sortie de la porte 16 est alors à zéro. Au front montant du signal FUT, ce zéro est enregistré dans la bascule 18, ce qui donne Q = 0, comme précédemment : rien ne change et l'état où "tout va bien" est maintenu.

Supposons maintenant qu'un état où "tout va bien" est encore obtenu depuis un temps supérieur à la durée d'une trame, mais cette fois avec une modulation négative et que donc le signal sur la connexion 19 est 1 : c'est aussi le signal Q de la bascule 18, appliqué à l'entrée 26 de la porte 15. Bien entendu un signal zéro, qui est celui de $\overline{Q}$, est alors présent à l'entrée 23 de la porte 17. Après le comptage de cinq impulsions, le signal TC = 1 est présent et maintenant les états des quatre entrées 23, 24, 25, 26 des portes 17 et 15 sont respectivement : 0, 0, 1, 1. Les sorties des portes 17 et 15 sont donc l'une à 1 et l'autre à zéro, et la sortie de la porte 16 est alors à 1. Au front montant du signal FUT, ce 1 est enregistré dans la bascule 19, ce qui donne Q = 1, comme précédemment : rien ne change et l'état où "tout va bien" est maintenu.

Supposons maintenant un état où le choix de la modulation est mauvais. Supposons par exemple que la modulation est positive alors que le dispositif fournit pour le moment sur la connexion 19 un signal Q = 1. Les cinq impulsions ne sont pas comptées correctement, et le signal TC = 0 est présent, au temps 27 de la figure 2. Maintenant les états des quatre entrées 23, 24, 25, 26 des portes 17 et 15 sont respectivement : 0, 1, 0, 1. Les sorties des portes 17 et 15 sont donc toutes deux à 1, et la sortie de la porte 16 est alors à zéro. Au front montant du signal FUT, ce zéro est enregistré dans la bascule 18, ce qui donne Q = 0 alors qu'on avait précédemment Q = 1. La commande du démodulateur 20 est maintenant correcte. Il est facile de vérifier que le dispositif fonctionne correctement aussi lorsque la modulation devient négative alors qu'elle était antérieurement positive.

## Revendications

1. Dispositif pour indiquer la polarité d'un signal video, signal video qui comporte des intervalles de suppression de trame pendant lesquels est présente une pluralité de signaux particuliers, caractérisé en se qu'il est muni d'un compteur pour compter lesdits signaux particuliers à partir du début de l'intervalle de suppression de trame et pendant une durée déterminée, et d'un circuit logique qui fournit à chaque fin d'intervalle de suppression de trame un signal binaire qui reste inchangé lorsque le chiffre de comptage du compteur est égal à un nombre prédéterminé et qui est inversé lorsque le chiffre de comptage du compteur est différent dudit nombre prédéterminé.

2. Dispositif selon la revendication 1, caractérisé en ce que le compteur est muni d'une entrée d'autorisation de comptage qui est reliée à un circuit de séparation de synchronisation, afin d'en recevoir un signal dont la durée correspond à la durée de cinq demi-lignes, et en ce que ledit chiffre de comptage déterminé du compteur est cinq.

3. Dispositif selon la revendication 2, caractérisé en ce que le compteur est muni d'une entrée d'initialisation qui est reliée au circuit de séparation de synchronisation, afin d'en recevoir un signal qui commence environ une demi ligne avant le signal sur l'entrée d'autorisation de comptage

4. Dispositif selon l'une quelconque des revendications précédentes, caractérisé en ce que le compteur repart à zéro lorsqu'il a atteint le chiffre de comptage égal à un nombre prédéterminé, en indiquant alors sur une sortie spécifique que le chiffre de comptage a atteint ledit nombre prédéterminé, et cette sortie spécifique est reliée à une entrée du susdit circuit logique.

5. Dispositif selon l'une quelconque des revendications précédentes, caractérisé en ce que le susdit circuit logique est muni d'une première porte NON-ET, à deux entrées, à une première entrée de laquelle est reliée une sortie spécifique du compteur indiquant que le chiffre de comptage a atteint ledit nombre prédéterminé, laquelle sortie spécifique est aussi reliée via un inverseur à une première entrée d'une seconde porte NON-ET, à deux entrées, les sorties de ces deux portes sont chacune reliées à une entrée d'une troisième porte NON-ET, à deux entrées, dont la sortie est reliée à l'entrée D d'une bascule de type D, à l'entrée d'horloge de laquelle est amené un signal qui englobe l'ensemble du temps de suppression de trame, les sorties Q et $\overline{Q}$ de ladite bascule étant rebouclées sur des deuxièmes entrées respectivement des première et seconde portes.

FIG.1

FIG.2

FIG.3

Office européen
des brevets

RAPPORT DE RECHERCHE
EUROPEENNE

Numéro de la demande

EP 91 20 1077

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 320 641   (SGS-THOMSON)<br>* Abrégé; figure 1 *<br>— — — | 1 | H 04 N 5/46<br>H 04 N 7/167 |
| A | US-A-4 357 630   (ODAKA)<br>* Abrégé; colonne 2, lignes 30-61; colonne 4, lignes 6-28; figures 1,2 *<br>— — — | 1-5 | |
| A | EP-A-0 116 424   (SONY)<br>* Abrégé; figures 2,4 *<br>— — — — — | 1 | |

DOMAINES TECHNIQUES
RECHERCHES (Int. Cl.5)

H 04 N

Le présent rapport de recherche a été établi pour toutes les revendications

| Lieu de la recherche | Date d'achèvement de la recherche | Examinateur |
|---|---|---|
| La Haye | 16 juillet 91 | VAN DER ZAAL R. |